# EUROPEAN PATENT SPECIFICATION

(11) **EP 3 396 081 B1**
(45) Date of publication and mention of the grant of the patent: **28.04.2021**
(21) Application number: 18164131.7
(22) Date of filing: 27.03.2018
(51) Int. Cl.: E04C 5/16, F16B 7/04, F16B 2/06, F16B 2/12

(54) **CLAMP**
KLEMME
PINCE

(30) Priority: 26.04.2017 GB 201706610
(43) Date of publication of application: 31.10.2018
(73) Proprietor: Ischebeck Titan Ltd., Burton-on-Trent Staffordshire DE14 2TG (GB)
(72) Inventor: Taylor, Mark, Burton-on-Trent Staffordshire DE14 2TG (GB)
(74) Representative: Dolleymores

(56) References cited:
- FR-A- 1 337 147
- GB-A- 600 385
- US-A- 1 396 115
- US-A- 2 894 773

## Description

The present disclosure relates to a clamp. In particular to a clamp that is suitable for clamping a pair of bars to one another. The bars may comprise reinforcing bars that form part of a formwork for use in steel reinforced concrete construction.

Steel reinforcing bar, commonly abbreviated and referred to as "rebar" is widely used for reinforcing concrete structures. In the formation of poured concrete slabs, for example, rebar lattices/meshes are commonly used, which comprise a plurality of crossed overlapping bars fastened together at their intersections.

The intersections formed by the crossed bars are typically tied together by strapping material or wire. However, the tying together is not suitable alone where the lattice is subject to mechanical loading. Such mechanical loading may occur when the lattice is being lifted into position. It may further take the form of mechanical loading from an end stop. Welding can be used to make the lattice suitable for receiving mechanical loads, however, welding is skilled and time consuming, can diminish the structural properties of the steel, and causes a fire risk.

The present invention arose in a bid to provide an improved means for fixing intersections of such structures to make them suitable for receiving mechanical loads.

Prior art clamps are known from US 1396115, FR 1337147, GB 600385 and US 2894773.

According to the present invention, in a first aspect, there is provided a clamp for clamping a pair of bars to one another, as recited by Claim 1.

The first guide is preferably arranged to direct the positioning of the one of the bars with its axis perpendicular to the axes of the bolts. For such purpose, the first guide may have a guide axis that is perpendicular to the axes of the bolts (as well as at an oblique angle to the plane transecting the clamp).

The first guide is preferably arranged at an angle of substantially 45 degrees to the plane transecting the clamp.

The first clamping member may further comprises a second guide, the second guide being arranged at an angle to the first guide. The second guide is preferably arranged to direct the positioning of the one of the bars with its axis perpendicular to the axes of the bolts. For such purpose, the first guide may have a guide axis that is perpendicular to the axes of the bolts (as well as at an oblique angle to the plane transecting the clamp and at an angle to the guide axis of the first guide).

The clamp is preferably arranged such that the axes of the clamped bars will be non-parallel.

The second clamping member preferably comprises a U-bolt. In such case, the legs of the U-bolt define the pair of bolts.

Further, preferred, features are presented in the dependent claims.

According to the present invention in a further aspect, there is provided a lattice of crossed overlapping bars fastened together at their intersections, two or more of the bars being fastened together at one of the intersections with a clamp as defined above. The bars preferably comprise reinforcing bars.

According to the present invention in another aspect, there is provided a concrete structure comprising a lattice, as defined above, embedded therein.

Non-limiting embodiments will now be described, by way of example only, with reference to the accompanying drawings, in which:
Figure 1 shows an isometric view of the clamp in use, clamping a pair of reinforcing bars perpendicular to one another;
Figure 2 shows a top view of the clamp of Figure 1 in use;
Figure 3 shows a front view of the clamp of Figure 1;
Figure 4 shows a side view of the clamp of Figure 1;
Figure 5 shows the clamp of Figure 1 rotated through 45 degrees about a vertical axis from the front view of Figure 3; and
Figure 6 shows a developed view of the first clamping member of the clamp of Figure 1.

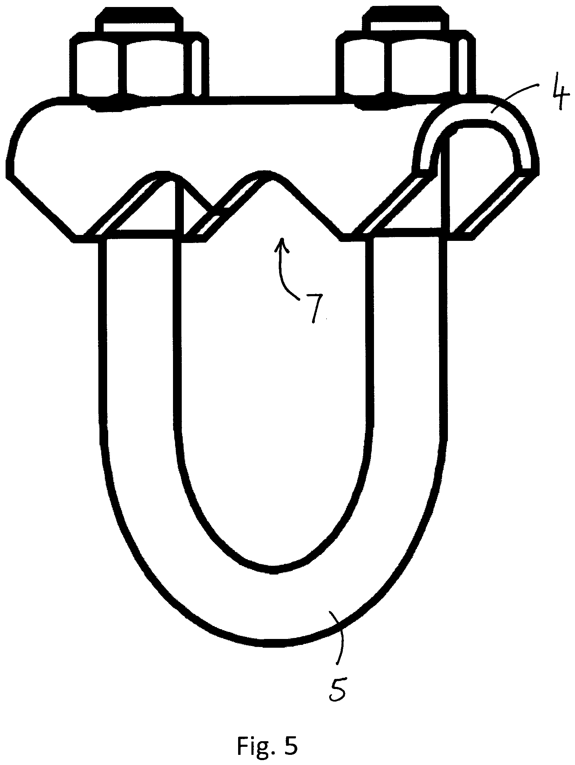

The present invention provides a clamp 1 for clamping a pair of bars 2, 3 to one another. The bars are preferably clamped at an angle to one another, i.e. they are non-parallel when clamped. The clamp comprises a first clamping member 4 and a second clamping member 5 that are bolted together by a pair of bolts 6. The axes of both bolts 6 lie on a plane P transecting the clamp. The first clamping member 4 comprises a first guide 7, as best seen in Figure 5, which is arranged to direct the positioning of one of the bars with its axis perpendicular to the axes of the bolts. The first guide is arranged at an oblique angle to the plane P transecting the clamp. The first guide is preferably arranged at an angle of substantially 45 degrees to the plane P transecting the clamp. It could, of course, be arranged at various alternative angles, as will be readily appreciated by those skilled in the art.

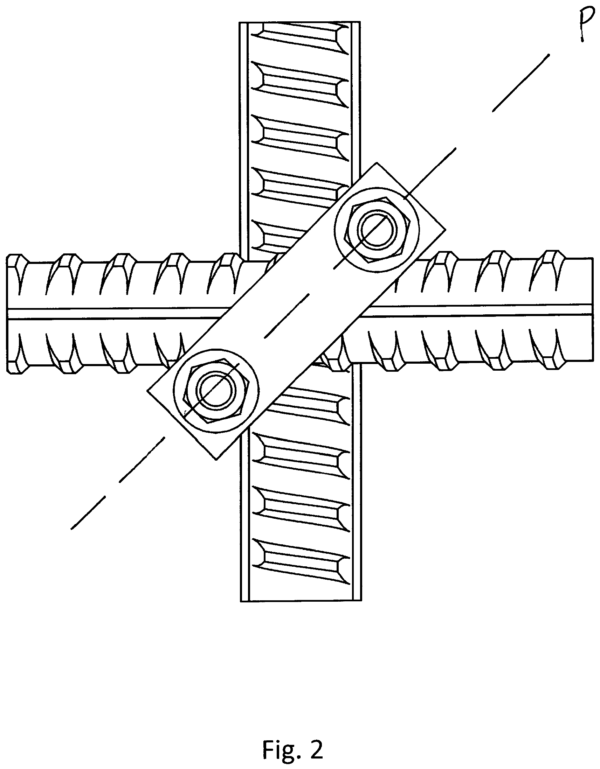

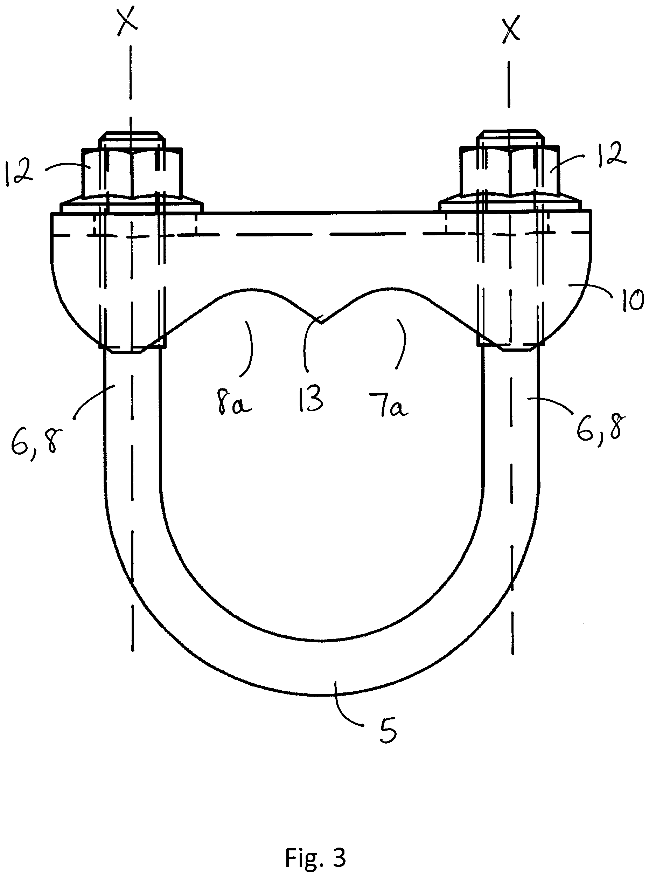

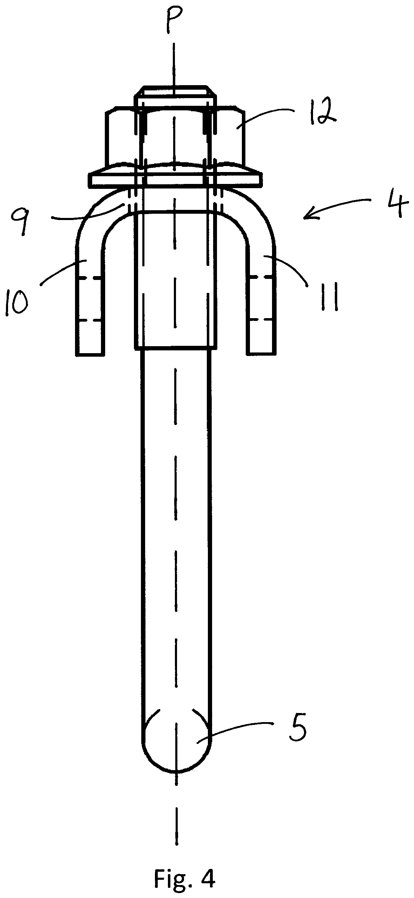

The plane P is shown in Figures 2 and 4. Where, as is preferred, the second clamping member 5 comprises a U-bolt, the spaced parallel legs 8 of the U-bolt define the pair of bolts 6. The axes X, X of the pair of bolts 6 defined by the legs 8 are shown in the front view of Figure 3.

The first clamping member may comprise the first guide 7 only but preferably further comprises a second guide 8. The second guide 8 is arranged at an angle to the first guide 7. The second guide 8 is preferably of identical form to the first guide 7 but arranged at substantially 90 degrees to the first guide. By the provision of first and second guides arranged perpendicular to one another, a single clamp may be used in multiple orientations, depending on the arrangement of the bars to be fixed to one another or the space around the bars. A single one only of the first and second guides 7, 8 will be used at any time. Whilst the first and second guides in the present arrangement are identical to one another, it will be appreciated by those skilled in the art that alternative arrangements could be provided in which the first and second guides differ in form to one another.

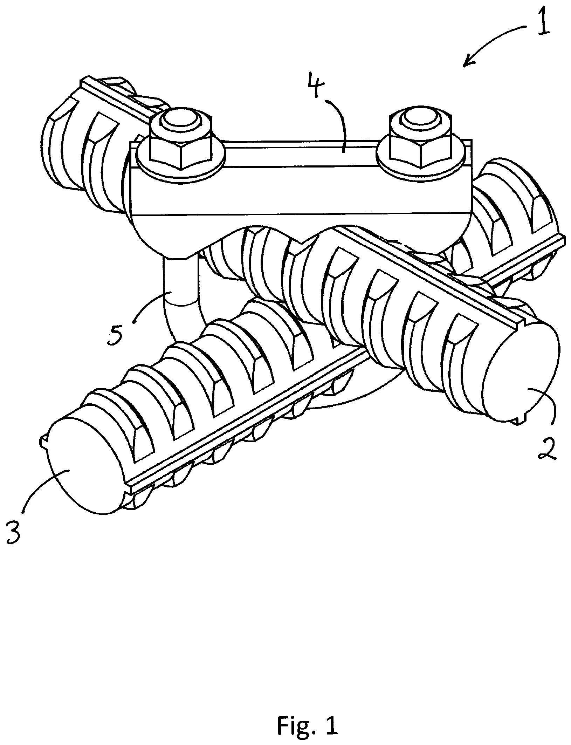

As is clearly shown, with a pair of bars clamped using the clamp, the orientation of the bar 2 that is engaged by the first clamping member 4 (the upper bar 2 in Figures 1 and 2) is fixed by the first (or, alternatively, second) guide. The clamping force presses the bar 2 into the guide 7, which prevents its rotation. In the Figures, the first guide 7 is used. The guides of the present arrangement have guide axes that are each oriented at 45 degrees to the plane P (and at 90 degrees to one another). They may, however, be arranged at different angles. The guide axes are preferably perpendicular to the axes of the bolts and at an oblique angle to the plane P, as best seen in Figures 1, 4 and 5. By such arrangement, the bar that is engaged by either the first or second clamping member will be directed with its axis parallel to/aligned with the guide axis and both perpendicular to the axes of the bolts and at an oblique angle to the plane P.

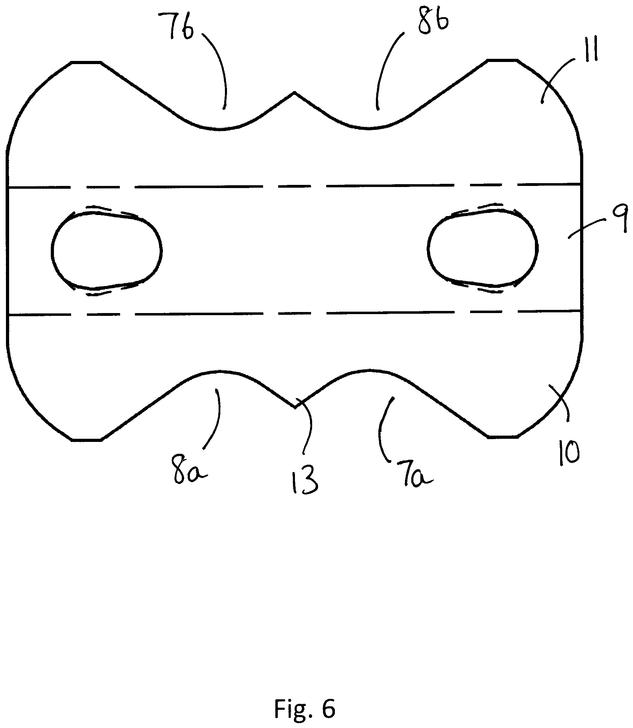

In the present arrangement, the first clamping member is formed from a U-shaped plate, as seen most clearly in Figures 4 and 5. Figure 6 shows the plate in developed (flattened) form.

The first clamping member 4 comprises a base 9 and a pair of jaws 10, 11 that depend from the long edges of the base. The jaws are preferably each arranged at substantially 90 degrees to the base, parallel to one another. As is clear, by such arrangement, the jaws are spaced from one another by substantially the width of the base and are substantially planar.

In the present arrangement comprising first and second guides 7, 8, the jaws each have first 7a, 7b and second 8a, 8b notches formed therein. In alternative arrangements with a single guide only then the first and second jaws will have a single notch in each of the jaws 7, 8 only. The first notches 7a, 7b in the first and second jaws define the first guide 7. The second notches 8a, 8b in the first and second jaws define the second guide 8. As seen in Figure 6, the first clamping member may be symmetrical. The opposed notches 7a, 8b and 8a, 7b of the first and second jaws are aligned with one another along the length of the first clamping member, as seen in Figures 3 and 6.

With reference to Figures 3 and 5, the first guide 7 is further considered. Figure 3 shows a front view of the clamp whilst Figure 5 shows the clamp rotated through 45 degrees about a central vertical axis (passing through an apex of the U-bolt). As is clear, the first notches 7a, 7b that define the first guide 7 are offset from one another along the length of the first clamping member 4, wherein the form of the notches 7a, 7b and their offset is such that they define the guide 7 as seen in Figure 5 with its axis at 45 degrees to the plane P. The guide has a substantially triangular form with curved apex, as seen in Figure 5. This is achieved by the curved form of the notches, as seen in Figures 3 and 6. The form of the guide may of course be varied by varying the profile of the notches.

As best seen in Figures 3 and 6, the first and second notches 7a, 8a and 7b, 8b are arranged side by side on each of the jaws. They are immediately adjacent in the present arrangement with a point 13 between the first and second notches. The notches may be arranged differently and the point may be omitted in alternative arrangements.

In use, by tightening the bolts 12, the first and second clamping members 4, 5 are brought together, the bars received by the clamp are urged against one another with the bar 2 pressed into the first or second guide 7, 8 as appropriate.

It should be noted that whilst the depicted arrangement comprises a U-bolt as the second clamping member, in alternative arrangements the second clamping member may be similar, or identical, in form to the first clamping member. With such an arrangement both the bars will have their orientations fixed relative to the clamp. This is in contrast to the above described arrangement with the U-bolt in which only the bar 2 engaging the first clamping member 4 has its orientation fixed. The other bar 3 has its movement restricted by passing through the U-bolt and being clamped but some rotation remains possible. It is not guided such that its positioning is specifically directed.

In the arrangement in which the second clamping member is similar, or identical, in form to the first clamping member, the bolts joining the first and second clamping members may comprise a pair of threaded bars or conventional bolts. The first and second clamping members could each be provided with a first guide only, with the first guides of the first and second clamping members being arranged at 90 degrees (or another desired angle) to one another. Alternatively, the first and second clamping members could each comprise first and second guides, as is preferred.

The clamp may find particular use in the formation of reinforcing bar lattices/meshes for use in the reinforcement of poured concrete slabs or otherwise. Particularly where those lattices will be subjected to mechanical loading. Such lattices/meshes will comprise a lattice of crossed overlapping bars 2, 3 fastened together at their intersections. It is preferable that at least some of the intersections at which the bars overlap one another are provided with clamps as detailed above, for clamping the bars together. A concrete structure may be provided that has one or more such lattices embedded therein.

## Claims

1. A clamp (1) for clamping a pair of bars (2, 3) to one another, the clamp comprising first and second clamping members (4, 5) and a pair of bolts (6) that bolt together the first and second clamping members (4, 5), the axes of the bolts (6) lie on a plane (P) transecting the clamp, the first clamping member (4) comprising a first guide (7) arranged to direct the positioning of one of the bars, the first guide being arranged at an oblique angle to the plane transecting the clamp, wherein the first clamping member comprises first and second jaws (10,11), which are spaced from one another, each of the jaws having a first notch (7a, 7b) formed therein, with the first notches (7a, 7b) in the first and second jaws together defining the first guide, **characterised in that** the first notches (7a, 7b) are offset from one another along a length of the first clamping member (4).

2. A clamp as claimed in Claim 1, wherein the first guide is arranged to direct the positioning of the one of the bars with its axis perpendicular to the axes of the bolts.

3. A clamp as claimed in Claim 1 or 2, wherein the first guide is arranged at an angle of substantially 45 degrees to the plane transecting the clamp.

4. A clamp as claimed in any preceding claim, wherein the first clamping member further comprises a second guide, the second guide being arranged at an angle to the first guide.

5. A clamp as claimed in any preceding claim, wherein the second guide is arranged at an angle of substantially 90 degrees to the first guide.

6. A clamp as claimed in any preceding claim, wherein the second clamping member comprises a U-bolt.

7. A clamp as claimed in any of Claims 1 to 5, wherein the first and second clamping members are identical.

8. A clamp as claimed in Claim 4 or any claim dependent thereon, wherein each of the jaws is further provided with a second notch (8a, 8b) formed therein, the second notches in the first and second jaws together defining the second guide.

9. A clamp as claimed in Claim 8, wherein the first and second notches are arranged side by side on each of the jaws.

10. A clamp as claimed in Claim 9, wherein each of the jaws comprises a point (13) between the first and second notches.

11. A clamp as claimed in any preceding claim, wherein the notches have curved profiles.

12. A clamp as claimed in any preceding claim, wherein the jaws are each substantially planar.

13. A clamp as claimed in any preceding claim, wherein the jaws are substantially parallel to one another.

14. A lattice of crossed overlapping bars fastened together at their intersections, two or more of the bars being fastened together their intersection with a clamp as recited in any preceding claim.

## Patentansprüche

1. Klemme (1), um ein Paar von Stangen (2, 3) aneinander zu klemmen, wobei die Klemme erste und zweite Klemmelemente (4, 5) und ein Paar von Schraubbolzen (6) umfasst, welche die ersten und zweiten Klemmelemente (4, 5) verschrauben, wobei die Achsen der Schraubbolzen (6) auf einer Ebene (P) liegen, welche die Klemme durchschneidet, wobei das erste Klemmelement (4) eine erste Führung (7) umfasst, um die Positionierung einer der Stangen zu steuern, wobei die erste Führung in einem schiefen Winkel zur Ebene angeordnet ist, welche die Klemme durchschneidet, wobei das erste Klemmelement erste und zweite Backen (10, 11) umfasst, die voneinander beabstandet sind, wobei jede der Backen eine darin geformte erste Kerbe (7a, 7b) aufweist, wobei die ersten Kerben (7a, 7b) in den ersten und zweiten Backen zusammen die erste Führung definieren, **dadurch gekennzeichnet, dass** die ersten Kerben (7a, 7b) entlang einer Länge des ersten Klemmelements (4) voneinander versetzt sind.

2. Klemme wie in Anspruch 1 beansprucht, wobei die erste Führung angeordnet ist, die Positionierung der einen der Stangen mit ihrer Achse senkrecht zu den Achsen der Schraubbolzen zu steuern.

3. Klemme wie in Anspruch 1 oder 2 beansprucht, wobei die erste Führung in einem Winkel von wesentlich 45 Grad zur Ebene angeordnet ist, welche die Klemme durchschneidet.

4. Klemme wie in irgendeinem vorhergehenden Anspruch beansprucht, wobei das erste Klemmelement ferner eine zweite Führung umfasst, wobei die zweite Führung in einem Winkel zur ersten Führung angeordnet ist.

5. Klemme wie in irgendeinem vorhergehenden Anspruch beansprucht, wobei die zweite Führung in einem Winkel von wesentlich 90 Grad zur ersten Führung angeordnet ist.

6. Klemme wie in irgendeinem vorhergehenden Anspruch beansprucht, wobei das zweite Klemmelement eine Bügelschraube umfasst.

7. Klemme wie in irgendeinem der Ansprüche 1 bis 5 beansprucht, wobei die ersten und zweiten Klemmelemente identisch sind.

8. Klemme wie in Anspruch 4 oder irgendeinem davon abhängigen Anspruch beansprucht, wobei jede der Backen ferner mit einer darin geformten zweiten Kerbe (8a, 8b) versehen ist, wobei die zweiten Kerben in den ersten und zweiten Backen zusammen die zweite Führung definieren.

9. Klemme wie in Anspruch 8 beansprucht, wobei die ersten und zweiten Klemmen an jeder der Backen nebeneinander angeordnet sind.

10. Klemme wie in Anspruch 9 beansprucht, wobei jede der Backen eine Spitze (13) zwischen den ersten und zweiten Kerben umfasst.

11. Klemme wie in irgendeinem vorhergehenden Anspruch beansprucht, wobei die Kerben gekrümmte Profile aufweisen.

12. Klemme wie in irgendeinem vorhergehenden Anspruch beansprucht, wobei die Backen jeweils wesentlich ebenflächig sind.

13. Klemme wie in irgendeinem vorhergehenden Anspruch beansprucht, wobei die Backen wesentlich parallel zueinander sind.

14. Gitter aus gekreuzten überlappenden Stangen, die an ihren Schnittstellen miteinander verbunden sind, wobei zwei oder mehr der Stangen an ihren Schnittstellen mit einer Klemme wie in irgendeinem vorhergehenden Anspruch rezitiert miteinander verbunden sind.

## Revendications

1. Bride (1) pour le serrage, l'une à l'autre, d'une paire de barres (2, 3), la bride comprenant des premier et deuxième éléments de serrage (4, 5) et une paire de boulons (6) fixant ensemble les premier et deuxième éléments de serrage (4, 5), les axes des boulons (6) reposant sur un plan (P) sectionnant la bride, le premier élément de serrage (4) comprenant un premier guide (7) agencé de façon à diriger le positionnement d'une des barres, le premier guide étant agencé à un angle oblique par rapport au plan sectionnant la bride, le premier élément de serrage comprenant des première et deuxième mâchoires (10, 11) espacées l'une de l'autre, chacune des mâchoires possédant une première encoche (7a, 7b) formée dedans, les premières encoches (7a, 7b) dans les première et deuxième mâchoires définissant le premier guide, **caractérisée en ce que** les premières encoches (7a, 7b) sont décalées l'une de l'autre le long d'une longueur du premier élément de serrage (4).

2. Bride selon la revendication 1, le premier guide étant agencé pour diriger le positionnement de l'une des barres, son axe étant perpendiculaire aux axes des boulons.

3. Bride selon la revendication 1 ou 2, le premier guide étant agencé à un angle égal substantiellement à 45 degrés par rapport au plan sectionnant la bride.

4. Bride selon une quelconque des revendications précédentes, le premier élément de serrage comprenant en outre un deuxième guide, le deuxième guide étant agencé à un angle par rapport au premier guide.

5. Bride selon une quelconque des revendications précédentes, le deuxième guide étant agencé à un angle égal substantiellement à 90 degrés par rapport au premier guide.

6. Bride selon une quelconque des revendications précédentes, le deuxième élément de serrage comprenant un étrier en U.

7. Bride selon une quelconque des revendications 1 à 5, les premier et deuxième éléments de serrage étant identiques.

8. Bride selon la revendication 4, ou toute autre revendication en dépendant, chacune des mâchoires étant dotée en outre d'une deuxième encoche (8a, 8b) réalisée dedans, les deuxièmes encoches des première et deuxième mâchoires définissant ensemble le deuxième guide.

9. Bride selon la revendication 8, les première et deuxième encoches étant agencées côte à côte sur chacune des mâchoires.

10. Bride selon la revendication 9, chacune des mâchoires comprenant un point (13) entre les première et deuxième encoches.

11. Bride selon une quelconque des revendications précédentes, les mâchoires présentant un profil incurvé.

12. Bride selon une quelconque des revendications précédentes, les mâchoires étant substantiellement planes.

13. Bride selon une quelconque des revendications précédentes, les mâchoires étant substantiellement parallèles l'une à l'autre.

14. Treillis de barres entrecroisées se chevauchant, fixées ensemble à leurs intersections, deux ou plusieurs des barres étant fixées ensemble à leur intersection à l'aide d'une bride selon une quelconque des revendications précédentes.
